(19) Europäisches Patentamt
European Patent Office
Office européen des brevets

(11) **EP 2 094 521 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(21) Anmeldenummer: **07846517.6**

(22) Anmeldetag: **30.10.2007**

(51) Int Cl.:
*B60K 31/00* (2006.01)  *B60W 30/16* (2006.01)
*B60W 30/12* (2006.01)

(86) Internationale Anmeldenummer:
**PCT/EP2007/009401**

(87) Internationale Veröffentlichungsnummer:
**WO 2008/071262 (19.06.2008 Gazette 2008/25)**

(54) **FAHRERASSISTENZSYSTEM UND VERFAHREN ZUR UNTERSTÜTZUNG DES FAHRERS EINES FAHRZEUGS BEIM SPURHALTEN**

DRIVER ASSISTANCE SYSTEM AND METHOD FOR ASSISTING THE DRIVER OF A VEHICLE IN KEEPING TO THE LANE

SYSTÈME D'ASSISTANCE AU CONDUCTEUR ET PROCÉDÉ D'ASSISTANCE AU CONDUCTEUR POUR LE MAINTIEN DE LA VOIE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.12.2006 DE 102006058412**

(43) Veröffentlichungstag der Anmeldung:
**02.09.2009 Patentblatt 2009/36**

(73) Patentinhaber: **Daimler AG**
**70327 Stuttgart (DE)**

(72) Erfinder: **FRITZ, Hans**
**73061 Ebersbach (DE)**

(74) Vertreter: **JENSEN & SON**
**366-368 Old Street**
**London**
**EC1V 9LT (GB)**

(56) Entgegenhaltungen:
**DE-A1- 4 221 015    DE-A1- 10 159 658**
**DE-A1- 10 354 290**

## Beschreibung

Die Erfindung betrifft ein Fahrerassistenzsystem und ein Verfahren zur Unterstützung des Fahrers eines Fahrzeugs beim Spurhalten gemäß den Oberbegriffen der unabhängigen Ansprüche.

Aus der DE 100 17 279 A1 ist ein gattungsgemäßes Fahrerassistenzsystem und ein gattungsgemäßes Verfahren bekannt, bei dem der Fahrer des Fahrzeugs entlastet wird, indem in einem für einen Stop-and-Go-Betrieb typischen niederen Fahrgeschwindigkeitsbereich die Quer- und Längsführung des Fahrzeugs vom System vollständig übernommen wird. Die Querführung des Fahrzeugs kann dabei nach Fahrspurmarkierungen erfolgen, die auf der Fahrbahn aufgebracht sind und mittels einer Videokamera erkannt werden, oder nach einem dem Fahrzeug vorausfahrenden Führungsfahrzeug erfolgen. Das bekannte Fahrerassistenzsystem bietet dem Fahrer bei hohen Fahrgeschwindigkeiten keine Unterstützung an, da es sich beim Überschreiten einer vorgegebenen Grenzgeschwindigkeit automatisch abschaltet.

Aus der DE 199 19 644 C2 ist ein Fahrerassistenzsystem zur Unterstützung des Fahrers eines Fahrzeugs bei der Fahrzeugquerführung bekannt, bei dem ein dem Fahrzeug vorausfahrendes Fahrzeug als Führungsfahrzeug detektiert wird und bei dem der Abstand zu dem Führungsfahrzeug sowie dessen Richtungswinkel zu der Längsachse des Fahrzeugs oder der laterale Abstand zwischen dem Fahrzeug und dem Führungsfahrzeug ermittelt werden, um aus diesen Daten ein Lenkstellsignal zu generieren, durch das der Lenkwinkel des Fahrzeugs derart variiert wird, das das Fahrzeug dem Führungsfahrzeug möglichst genau in dessen Bahn nachgeführt wird. Diese Art der Fahrzeugführung wird auch als Deichselregelung bezeichnet, da das Fahrzeug dem Führungsfahrzeug folgt, als ob es mit diesem über eine fiktive Deichsel verbunden wäre.

Der Erfindung liegt die Aufgabe zugrunde, ein Fahrerassistenzsystem gemäß dem Oberbegriff des Patentanspruchs 1 anzugeben, das dem Fahrer eine zuverlässige Unterstützung über den gesamten Geschwindigkeitsbereich des Fahrzeugs anbietet. Der Erfindung liegt weiterhin die Aufgabe zugrunde, ein entsprechendes Verfahren zur Unterstützung des Fahrers beim Spurhalten anzugeben.

Die Aufgabe wird durch die Merkmale der unabhängigen Ansprüche gelöst. Vorteilhafte Ausgestaltungen und Weiterbildungen ergeben sich aus den Unteransprüchen.

Das erfindungsgemäße Fahrerassistenzsystem zur Unterstützung des Fahrers eines Fahrzeugs bei der Fahrzeugführung, umfasst ein Fahrspurerkennungssystem zum Erkennen einer vom Fahrzeug befahrenen momentanen Fahrspur, beispielsweise anhand von Fahrspurbegrenzungen, ein Objekterkennungssystem zum Erkennen eines dem Fahrzeug vorausfahrenden Führungsfahrzeugs und zum Ermitteln einer Objektspur als Bewegungsspur des Führungsfahrzeugs, und eine Steuereinrichtung zur Unterstützung des Fahrers beim Halten der Fahrspur, wobei die Steuereinrichtung in einer reinen fahrspurbezogenen Unterstützungsart betreibbar ist, in der die Unterstützung basierend auf der erkannten momentanen Fahrspur erfolgt, in einer reinen objektbezogenen Unterstützungsart betreibbar ist, in der die Unterstützung basierend auf der erkannten Objektspur erfolgt, und in einer fusionierten Unterstützungsart betreibbar ist, die einer Kombination der fahrspurbezogenen und objektbezogenen Unterstützungsart entspricht, und wobei die Steuereinrichtung eine der Unterstützungsarten als Querführungsbetriebsart festlegt, nach der die Unterstützung erfolgen soll, und eingerichtet ist, die Querführungsbetriebsart in Abhängigkeit der momentanen Fahrgeschwindigkeit des Fahrzeugs festzulegen.

Die zur Verfügung stehende Unterstützungsart wird somit an die momentane Fahrgeschwindigkeit des Fahrzeugs angepasst und ermöglicht daher eine Unterstützung über den gesamten Geschwindigkeitsbereich des Fahrzeugs. Es ist dabei selbstverständlich, dass die jeweilige Unterstützungsart nur dann als Querführungsbetriebsart festgelegt wird, wenn die für die jeweilige Unterstützungsart erforderlichen Voraussetzungen erfüllt sind, nämlich dass die Fahrspur, die Objektspur bzw. beide Spuren erkannt worden sind.

Vorzugsweise legt die Steuereinrichtung bei einer Fahrgeschwindigkeit oberhalb eines oberen Geschwindigkeitsgrenzwerts die fahrspurbezogene Unterstützungsart als Querführungsbetriebsart fest, sofern die momentane Fahrspur erkannt wird, wobei bei einem Ausfall der Fahrspurerkennung vorzugsweise auf die objektbezogene Unterstützungsart umgeschaltet wird, sofern vorab ein dem Fahrzeug in dessen Fahrspur vorausfahrendes Fahrzeug als Führungsfahrzeug für die die objektbezogene Unterstützungsart erkannt worden ist.

Die Steuereinrichtung ist vorzugsweise eingerichtet, die Querführungsbetriebsart in einen Passivzustand zu schalten, in dem keine Unterstützung angeboten wird, falls der Ausfall der Fahrspurerkennung länger dauert als eine vorgegebene Grenzzeit oder falls beim Ausfall der Spurerkennung kein Führungsfahrzeug erkannt worden ist und ist weiterhin vorzugsweise eingerichtet, die Querführungsbetriebsart vom Passivzustand in die fahrspurbezogene Unterstützungsart umzuschalten, sobald die momentane Fahrspur wieder erkannt wird. Die objektbasierte Unterstützungsart wird damit lediglich temporär aktiviert, um kurzzeitige Ausfälle der Fahrspurerkennung zu überbrücken.

Vorzugsweise generiert die Steuereinrichtung eine Lenkanweisung, die an den Fahrer und/oder an eine Lenkstelleinrichtung zur Verstellung eines Lenkwinkels des Fahrzeugs ausgegeben wird. Durch die Lenkanweisung kann der Fahrer angewiesen werden, die Lenkaufgabe wahrzunehmen, bzw. eine selbsttätige Kurskorrektur bewirkt werden.

In einer vorteilhaften Weiterbildung des Verfahrens wird die Lenkanweisung als ein Lenkstellsignal bereitgestellt, durch das an einer Lenkeinrichtung des Fahrzeugs ein Zusatzlenkmoment und/oder ein Zusatzlenkwinkel eingestellt wird, zusätzlich zu einem vom Fahrer durch eine manuelle Lenkaktion vorgegebenen Lenkmoment oder Lenkwinkel. Dem Fahrer wird somit am Lenkrad des Fahrzeugs eine haptische Rückmeldung über die Lenkanweisung gegeben.

Vorzugsweise wird basierend auf der erkannten momentanen Fahrspur bzw. der erkannten Objektspur eine Sollspur für das Fahrzeug bestimmt und die Lenkanweisung erst ausgegeben, wenn das Fahrzeug ein um die Sollspur herum definiertes Toleranzband vorgegebener Breite verlässt.

In einer vorteilhaften Weiterbildung umfasst das die Steuereinrichtung eine Längsregelfunktion zur Regelung des Abstands zu dem erkannten Führungsfahrzeug und ist eingerichtet, bei einer Fahrgeschwindigkeit unterhalb eines unteren Geschwindigkeitsgrenzwerts die objektbezogene Unterstützungsart als Querführungsbetriebsart festzulegen, falls die Längsregelfunktion aktiv ist oder aktiviert wird, und bei nicht aktiver Längsregelfunktion die Querführungsbetriebsart vorzugsweise in der gleichen Weise wie bei einer Fahrgeschwindigkeit oberhalb des oberen Geschwindigkeitsgrenzwerts festzulegen.

Vorzugsweise ist die Steuereinrichtung eingerichtet, die Bewegung des Fahrzeugs bei einer Fahrgeschwindigkeit unterhalb des unteren Geschwindigkeitsgrenzwerts und bei aktiver Längsregelfunktion im Sinne einer Längs- und Querverfolgung des Führungsfahrzeugs zu regeln.

Die Steuereinrichtung ist weiterhin vorzugsweise derart eingerichtet, dass sie die Querführungsbetriebsart bei einer Fahrgeschwindigkeit innerhalb eines durch den oberen und unteren Geschwindigkeitsgrenzwert definierten Geschwindigkeitsübergangsbereichs wie folgt festlegt:

- Falls die Längsregelfunktion nicht aktiv ist, wird die Querführungsbetriebsart in der gleichen Weise wie bei einer Fahrgeschwindigkeit oberhalb des oberen Geschwindigkeitsgrenzwerts festgelegt.

- Falls die Längsregelfunktion hingegen aktiv ist oder
  aktiviert wird, wird die fusionierte Unterstützungsart als Querführungsbetriebsart festgelegt und in Abhängigkeit der Fahrgeschwindigkeit derart variiert, dass bei einem Anstieg der Fahrgeschwindigkeit vom unteren zum oberen Geschwindigkeitsgrenzwert die bei niederer Fahrgeschwindigkeit geforderte objektbezogene Unterstützungsart kontinuierlich in die bei hoher Fahrgeschwindigkeit geforderte fahrspurbezogene Unterstützungsart übergeführt wird.

Die Steuereinrichtung ist vorzugsweise derart eingerichtet, dass die Umschaltung der Querführungsbetriebsart von der fahrspurbezogenen zur objektbezogenen Unterstützungsart wahlweise automatisch erfolgt oder in Antwort auf eine vom Fahrer durch eine Quittierungsaktion bestätigte Quittierungsanfrage, wobei der Fahrer vorzugsweise vorab festlegen kann, ob die Umschaltung automatisch erfolgen soll, auf die Quittierungsaktion hin erfolgen soll oder überhaupt nicht in Betracht kommen soll.

Die Quittierungsaktion entspricht vorzugsweise einer Betätigungsaktion durch die der Fahrer ein zur Aktivierung der Längsregelfunktion vorgesehenes Eingabemittel in gleicher Weise wie zur Aktivierung der Längsregelfunktion betätigt.

Bei dem erfindungsgemäßen Verfahren zur Unterstützung des Fahrers eines Fahrzeugs beim Halten einer vom Fahrzeug befahrenen momentanen Fahrspur, wird die momentane Fahrspur erkannt, beispielsweise anhand von Fahrspurbegrenzungen, eine Bewegungsspur eines dem Fahrzeug vorausfahrenden Führungsfahrzeugs als Objektspur ermittelt und eine Unterstützung angeboten, die als eine reine fahrspurbezogene Unterstützungsart basierend auf der erkannten momentanen Fahrspur erfolgen kann, oder als eine reine objektbezogene Unterstützungsart basierend auf der erkannten Objektspur erfolgen kann, oder als eine fusionierte Unterstützungsart basierend sowohl auf der erkannten momentanen Fahrspur als auch auf der erkannten Objektspur erfolgen kann, wobei die Unterstützung über den gesamten Geschwindigkeitsbereich des Fahrzeugs angeboten wird und wobei in Abhängigkeit der momentanen Fahrgeschwindigkeit des Fahrzeugs eine der Unterstützungsarten als Querführungsbetriebsart festegelegt wird, nach der die Unterstützung erfolgen soll.

Vorzugsweise wird in einem hohen Fahrgeschwindigkeitsbereich die fahrspurbezogene Unterstützungsart als Querführungsbetriebsart festgelegt, sofern die momentane Fahrspur erkannt wird, wobei ein temporärer Ausfall der Fahrspurerkennung durch die objektbezogene Unterstützungsart überbrückt wird, sofern vor dem Ausfall ein dem Fahrzeug in dessen Fahrspur vorausfahrendes Fahrzeug als Führungsfahrzeug für die objektbezogene Unterstützungsart erkannt worden ist.

Vorzugsweise wird in einem niederen

Fahrgeschwindigkeitsbereich die Querführungsbetriebsart in der gleichen Weise wie im hohen Fahrgeschwindigkeitsbereich festgelegt, sofern eine zur Abstandsregelung vorgesehene Längsregelfunktion des Fahrzeugs nicht aktiv ist, und als objektbezogene Unterstützungsart festgelegt, falls die Längsregelfunktion hingegen aktiv ist oder aktiviert wird, wobei die die Festlegung wahlweise automatisch erfolgt oder in Antwort auf eine vom Fahrer durch eine Quittierungsaktion bestätigte Quittierungsanfrage, durch welche dem Fahrer die Umschaltung auf die objektbasierten Unterstützungsart angeboten wird.

Die Quittierungsaktion ist dabei vorzugsweise identisch ist mit einer fahrerseitigen Betätigungsaktion zum Aktivieren der Längsregelfunktion.

Vorzugsweise wird dem Fahrer die Möglichkeit geboten, vorab festzulegen, ob die Festlegung der die objektbezogenen Unterstützungsart als Querführungsbetriebsart im niederen Fahrgeschwindigkeitsbereich automatisch erfolgen soll, in Antwort auf die fahrerseitige Quittierungsaktion erfolgen soll oder nicht erfolgen soll.

Vorzugsweise wird die Querführungsbetriebsart in einem Geschwindigkeitsübergangsbereich zwischen dem niederen und hohen Fahrgeschwindigkeitsbereich in der gleichen Weise wie im hohen Fahrgeschwindigkeitsbereich festgelegt, sofern die Längsregelfunktion nicht aktiv ist, und als fusionierte Unterstützungsart festgelegt, falls die Längsregelfunktion aktiv ist oder aktiviert wird, wobei die fusionierte Unterstützungsart in Abhängigkeit der Fahrgeschwindigkeit des Fahrzeugs derart variiert wird, dass die im niederen Fahrgeschwindigkeitsbereich geforderte objektbezogene Unterstützungsart beim Durchlaufen des Geschwindigkeitsübergangsbereichs kontinuierlich in die im hohen Fahrgeschwindigkeitsbereich geforderte fahrspurbezogene Unterstützungsart übergeführt wird.

Vorzugsweise wird zur Unterstützung des Fahrers ein Lenkeingriff durchgeführt, wobei der Lenkeingriff grundsätzlich mit einem geringen Automatisierungsgrad durchgeführt wird. Ein geringer Automatisierungsgrad bedeutet, dass der Grad der Unterstützung gering ist, so dass die Querführung des Fahrzeugs im Wesentlichen dem Fahrer überlassen wird. Im niederen Fahrgeschwindigkeitsbereich wird der Lenkeingriff bei aktiver Längsregelfunktion ausnahmsweise mit einem hohen Automatisierungsgrad durchgeführt. Ein hoher Automatisierungsgrad bedeutet, dass der Lenkeingriff des Fahrerassistenzsystems alleine schon ausreicht, um die gewünschte Querführung zu erreichen. Damit ist im niederen Fahrgeschwindigkeitsbereich bei automatischer Längsführung auch eine automatische Querführung des Fahrzeugs möglich, so dass der Fahrer bei der Längs- und Querführung des Fahrzeugs mit Hilfe des Fahrerassistenzsystems stark entlastet wird, da die Häufigkeit von erforderlichen manuellen Lenkkorrekturen gegenüber der Unterstützung mit geringem Automatisierungsgrad stark reduziert wird.

Der besondere Vorteil des erfindungsgemäßen Fahrerassistenzsystems und des erfindungsgemäßen Verfahrens besteht darin, dass dem Fahrer eine Unterstützung bei der Querführung des Fahrzeugs über den gesamten Geschwindigkeitsbereich des Fahrzeugs angeboten wird, sofern die Voraussetzungen für die Bestimmung einer Sollspur als Referenz für die Querführung erfüllt sind, d.h. sofern die Fahrspur bzw. die Position eines Führungsfahrzeug, dem das Fahrzeug folgen kann, erkannt werden, und dass die angebotene Unterstützung und der Grad der Unterstützung an die momentane Fahrgeschwindigkeit des Fahrzeugs angepasst wird. Die Anpassung erfolgt dabei dadurch, dass die Unterstützung im gesamten Fahrgeschwindigkeitsbereich des Fahrzeugs grundsätzlich mit geringem Automatisierungsgrad und grundsätzlich fahrspurbasiert angeboten wird und lediglich temporär, bei kurzzeitigen Ausfällen der Fahrspurerkennung, objektbasiert angeboten wird und dass die Unterstützung im niederen Fahrgeschwindigkeitsbereich ausnahmsweise objektbasiert und mit hohem Automatisierungsgrad angeboten wird, sofern die Längsregelfunktion des Fahrzeugs gleichzeitig aktiv ist.

Die Erfindung wird nachfolgend anhand eines Ausführungsbeispiels unter Bezugnahme auf die Figuren näher beschrieben. Es zeigen:

Fig. 1:    ein vereinfachtes Blockdiagramm des erfindungsgemäßen Fahrerassistenzsystems,

Fig. 2:    eine schematische Darstellung einer Verkehrssituation auf einer Straße,

Fig.3:    ein Diagramm zur Erläuterung der Funktionsweise des Fahrerassistenzsystems.

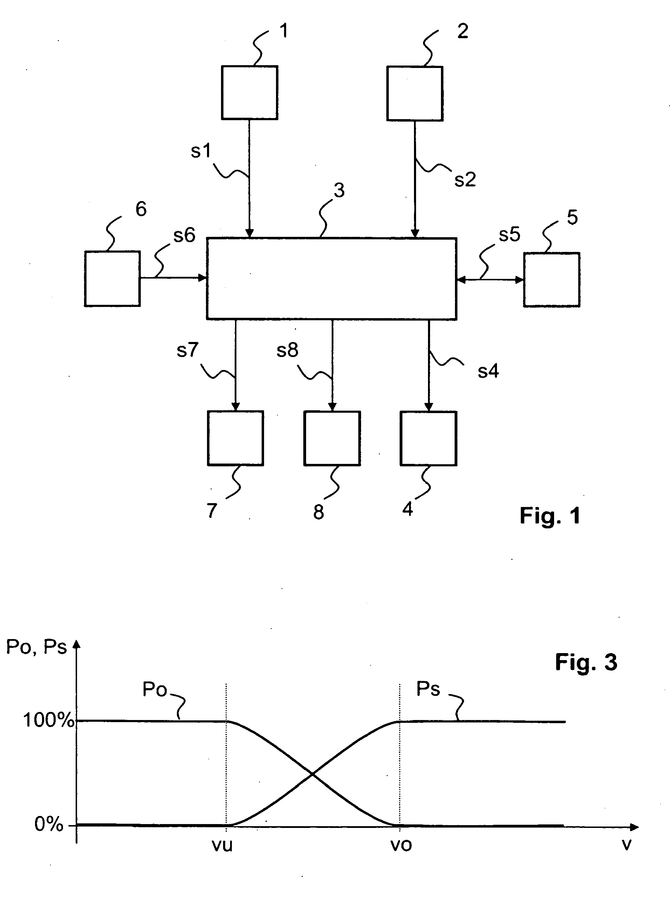

Erfindungsgemäß ist ein Fahrzeug mit einem Fahrerassistenzsystem ausgestattet, das gemäß Figur 1 ein Fahrspurerkennungssystem 1, ein Objekterkennungssystem 2, eine Steuereinrichtung 3, eine Lenkstelleinrichtung 4, eine Mensch-Maschine-Schnittstelle 5, eine Sensoreinrichtung 6, eine Motormomentstelleinrichtung 7 und eine Bremsmomentsstelleinrichtung 8 umfasst.

Das Fahrspurerkennungssystem 1 arbeitet videobasiert und erkennt anhand von Fahrspurmarkierungen, die als Fahrspurbegrenzungen auf der vom Fahrzeug befahrenen Fahrbahn aufgebracht sind, den Fahrspurverlauf der momentan befahrenen Fahrspur und erzeugt Spurdaten s1, die die Lage des Fahrzeugs relativ zur Fahrspur repräsentieren und gibt diese an die Steuereinrichtung 3 aus. Alternativ kann der Verlauf der Fahrspur und die Lage des Fahrzeugs relativ zur Fahrspur auch mit Hilfe von Magnetnägeln ermittelt werden, die in Fahrbahn eingebracht sind und vom Fahrzeug aus detektiert werden, oder mit Hilfe eines satellitengestützten Positionsbestimmungssystem anhand von digitalen Kartendaten.

Die Objekterfassungseinheit 2 tastet das vordere Umfeld des Fahrzeugs mit einem Radar- oder Laserstrahl ab, um Objekte vor dem Fahrzeug zu Erkennen und um deren Position relativ zum Fahrzeug zu ermitteln und gibt entsprechende Objektdaten s2 and die Steuereinrichtung 3 aus. Selbstverständlich ist es denkbar, die Objekterfassung auch videobasiert mit dem Fahrspurerkennungssystem 1 vorzunehmen. Des Weiteren besteht die Möglichkeit die Objektdaten durch eine Fahrzeug-Fahrzeug-Kommunikation zu ermitteln, beispielsweise basierend auf Positionsdaten eines dem Fahrzeug vorausfahrenden Fahrzeugs, die von diesem ermittelt über eine Funkverbindung ausgesendet werden.

Die Sensoreinrichtung 6 erfasst den aktuellen Fahrzustand des Fahrzeugs, einschließlich dessen Fahrgeschwindigkeit und liefert entsprechende Zustandsdaten s6 an die Steuereinrichtung 3.

Die Steuereinrichtung 3 ist eingerichtet, eine Querführungsunterstützungsfunktion und eine Abstandsregelfunktion zu erfüllen. Die Querführungsunterstützungsfunktion hat dabei die Aufgabe, den Fahrer bei der Fahrzeugquerführung nach Maßgabe des Verlaufs der momentanen Fahrspur und/oder der Bewegungsspur eines dem Fahrzeug vorausfahrenden Führungsfahrzeugs zu unterstützen.

Voraussetzung für die Verfügbarkeit der Querführungsunterstützungsfunktion ist daher, dass die Fahrspur erkannt wird oder zumindest ein dem Fahrzeug vorausfahrendes Führungsfahrzeug vorhanden ist und als Objekt erkannt wird, d.h. es müssen Spurdaten s1 bzw. Objektdaten s2 verfügbar sein. Die Abstandsregelfunktion ist eine Längsregelfunktion, die die Aufgabe hat, den Abstand zu dem erkannten vorausfahrenden Führungsfahrzeug zu regeln. Voraussetzung für die Verfügbarkeit der Abstandsregelfunktion ist, dass das hierzu benötigte Führungsfahrzeug vorhanden ist und erkannt wird.

Die Steuereinrichtung 3 steuert zur Erfüllung der Querführungsunterstützungsfunktion eine Lenkstelleinrichtung 4 an. Diese variiert in Abhängigkeit eines von der Steuereinrichtung 3 als Lenkanweisung ausgegebenen Lenkstellsignals s4 den Lenkwinkel an den lenkbaren Rädern des Fahrzeugs und bewirkt somit eine den Fahrer unterstützende Querführung des Fahrzeugs. Das Lenkstellsignal s4 entspricht dabei einem Zusatzlenkmoment und/oder einem Zusatzlenkwinkel, das bzw. der einem vom Fahrer durch eine Lenkradbetätigung vorgegebenen Lenkmoment oder Lenkwinkel additiv überlagert wird. Die Lenkstelleinrichtung 4 ist vorteilhafterweise als Lenkmomentsteller ausgeführt, so dass dem Fahrer in einer ersten Eskalationsstufe eine haptische Rückmeldung am Lenkrad gegeben wird, durch die er angewiesen wird, die Lenkaufgabe wahrzunehmen. Die Lenkanweisung kann in einer zweiten Eskalationsstufe eine additiv zum Zusatzlenkmoment aufgebrachte haptische Rückmeldung in Form von einer Vibration am Lenkrad des Fahrzeugs bewirken.

Zur Erfüllung der Abstandsregelfunktion steuert die Steuereinrichtung 3 über ein Motormomentstellsignal s7 und ein Bremsmomentstellsignal s8 die Motormomentstelleinrichtung 7 und die Bremsmomentsstelleinrichtung 8 an, um durch Variation des Antriebs- und/oder Bremsmoments den Abstand zu dem erkannten vorausfahrenden Führungsfahrzeug zu regeln.

Die Mensch-Maschine-Schnittstelle 5 hat die Aufgabe, dem Fahrer die Möglichkeit zu geben, die Querführungsunterstützungsfunktion und die Abstandsregelfunktion zu aktivieren oder zu deaktivieren und den Fahrer über Betriebszustände des Fahrerassistenzsystems zu informieren. Die Mensch-Maschine-Schnittstelle 5 kommuniziert hierzu über Schnittstellendaten s5 mit der Steuereinrichtung 3.

Die Mensch-Maschine-Schnittstelle 5 weist in der Figur nicht gezeigte Eingabemittel zur Aktivierung der Abstandsregelfunktion auf. Die Eingabemittel können insbesondere als ein Multifunktionsbedienhebel ausgeführt sein, der zur Aktivierung der Abstandsregelfunktion in eine bestimmte Richtung ausgelenkt werden muss. Falls die Abstandsregelfunktion den Abstand zum Führungsfahrzeug auch im niederen Geschwindigkeitsbereich bis zum Stillstand regelt, ist es empfehlenswert, die Abstandsregelfunktion nach einem Stillstand zu unterbrechen erst nach einer erneuten fahrerseitigen Aktivierungsbetätigung wieder zu aktivieren. Diese erneute fahrerseitige Aktivierungsbetätigung kann darin bestehen, dass der Fahrer den Multifunktionshebel erneut betätigt, oder dass er das Fahrpedal des Fahrzeugs betätigt. Das Fahrpedal fungiert somit ebenfalls als Eingabemittel zur Aktivierung der Abstandsregelfunktion, sofern letztere aufgrund eines Stillstand unterbrochen worden ist.

Die Mensch-Maschine-Schnittstelle 5 weist weiterhin eine in der Figur nicht gezeigte Anzeigeeinrichtung auf, über die der Fahrer über den aktuellen Betriebzustand des Fahrerassistenzsystems sowie über momentan mögliche Betriebszustände informiert wird. Insbesondere wird der Fahrer darüber informiert, ob eine spurdatenbasierte Unterstützungsart möglich ist, eine objektdatenbasierte Unterstützungsart möglich ist, eine auf Spurdaten und Objektdaten beruhende fusionierte Unterstützungsart möglich ist oder keine dieser Unterstützungsarten möglich ist, und nach welcher Unterstützungsart die Unterstützung momentan erfolgt.

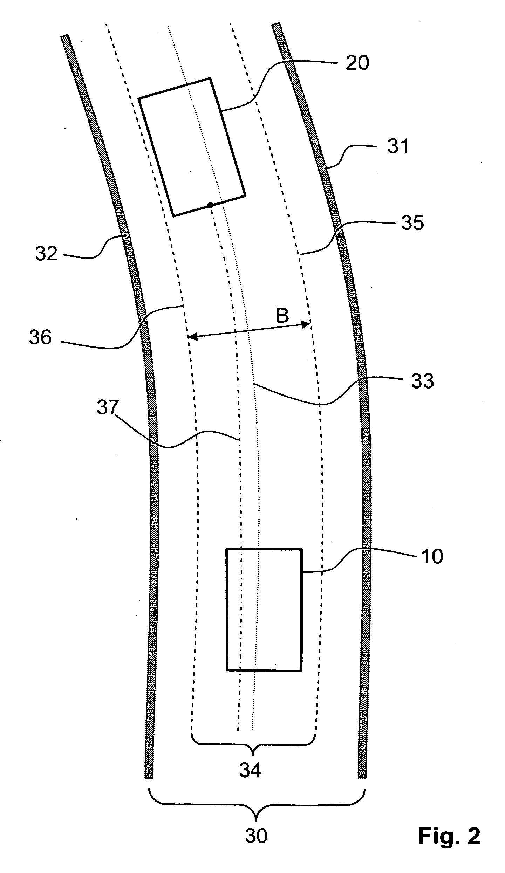

Figur 2 zeigt eine typische Verkehrssituation, anhand der die Funktionsweise des Fahrerassistenzsystems aus Figur 1 im Detail erläutert wird.

Gemäß Figur 2 fährt das mit dem erfindungsgemäßen Fahrerassistenzsystem ausgestattete Fahrzeug 10 auf einer Straße in einer momentanen Fahrspur 30 und folgt dabei einem in der gleichen Fahrspur 30 vorausfahrenden Führungsfahrzeug 20. Auf der Fahrbahn der Straße sind Spurmarkierungen als Fahrspurbegrenzungen 31, 32 aufgebracht. Eine Linie 37 stellt eine nachfolgend als Objektspur bezeichnete Bewegungsspur des Führungsfahrzeugs 20 dar, eine weitere Linie 33 stellt eine in der Mitte der Fahrspur 30 liegende Spurlinie dar und zwei weitere Linien 35, 36 bezeichnen Grenzen eines innerhalb der Fahrspur 30 liegenden Toleranzbereichs 34, der in Abhängigkeit des Verlaufs der Fahrspurbegrenzungen 31, 32 oder der Objektspur 37 festgelegt wird und dessen Breite B in Abhängigkeit der Fahrgeschwindigkeit des Fahrzeugs 10 variiert werden kann.

Der Toleranzbereich 34 stellt eine Sollspur dar, d.h. einen Bereich in dem das Fahrzeug 10 fahren soll. In diesem Bereich fährt der Fahrer manuell ohne Querführungsunterstützung. Eine Querführungsunterstützung wird von der Querführungsunterstützungsfunktion der Steuereinrichtung 3 grundsätzlich erst angeboten, wenn das Fahrzeug 10 den Toleranzbereich 34 verlässt. Dem Fahrer wird somit eine Unterstützung mit geringem Automatisierungsgrad angeboten, d.h. er muss mitlenken und kann die Lenkaufgabe nicht vollständig dem Fahrerassistenzsystem überlassen.

Die angebotene Unterstützung besteht in der ersten Eskalationsstufe darin, dass beim Verlassen des Toleranzbereichs die als Zusatzlenkmoment und/oder Zusatzlenkwinkel generierte Lenkanweisung, der Lenkmomentstelleinrichtung 4 als Lenkstellsignal s4 zugeführt wird und ein vom Fahrer als haptische Rückmeldung am Lenkrad fühlbares und jederzeit überbrückbares kurskorrigierendes Lenkmoment bewirkt, durch das das Fahrzeug zurück in den Toleranzbereich 34 geführt wird. Das kurskorrigierende Lenkmoment wird dabei mit zunehmender Abweichung vom Toleranzbereich 34 erhöht. Wenn die Abweichung einen bestimmten Wert überschreitet, wird in der zweiten Eskalationsstufe durch die Lenkanweisung eine Vibration am Lenkrad des Fahrzeugs 10 bewirkt, um den Fahrer durch diese weitere haptische Rückmeldung aufzufordern, manuell nachzulenken. Bei einer noch höheren Abweichung wird in einer dritten Eskalationsstufe als weitere Unterstützungsmaßnahme eine optische und/oder akustische Warnung über die Mensch-Maschine-Schnittstelle 5 an den Fahrer ausgegeben werden. Optional kann in der dritten Eskalationsstufe eine kurskorrigierende Wirkung auch über einen Einzelradbremseingriff erzielt werden, durch den einzelne Räder des Fahrzeugs gezielt abgebremst werden.

Das Fahrerassistenzsystem kann bei aktivierter Querführungsunterstützungsfunktion in mehreren Querführungsbetriebsarten betrieben werden, nämlich in einer reinen fahrspurbezogenen Unterstützungsart, in einer reinen objektbezogenen Unterstützungsart und in einer fusionierten Unterstützungsart.

Bei der reinen fahrspurbezogenen Unterstützungsart werden die den Verlauf der Fahrspur 30 repräsentierenden Spurdaten s1 herangezogen, um die Sollspur für die Querführung des Fahrzeugs zu bestimmen. Die Objektdaten s2 des Führungsfahrzeugs 20 bleiben hierbei unberücksichtigt. Die Erkennung der Fahrspur 30 ist demnach Voraussetzung für den Betrieb in der fahrspurbezogenen Unterstützungsart.

In dieser Unterstützungsart generiert die Steuereinrichtung 3 anhand der Spurdaten s1 ein von den Objektdaten s2 unabhängiges spurdatenbasiertes Lenkstellsignal Ms, das als Lenkstellsignal s4 der Lenkstelleinrichtung 4 zugeführt wird, um am Fahrzeug 10 eine kurskorrigierende Wirkung entsprechend dem durch das spurdatenbasierte Lenkstellsignal Ms vorgegebenen Zusatzlenkmoment und/oder Zusatzlenkwinkel zu erzielen.

Bei der reinen objektbasierten Unterstützungsart werden die den Verlauf der Objektspur 37 repräsentierenden Objektdaten s2 herangezogen, um die Sollspur für die Querführung des Fahrzeugs 10 zu bestimmen. Die Objektspur 37 wird somit wie eine fiktive Spur behandelt, entlang der das Fahrzeug 10 geführt werden soll. Der Verlauf der Fahrspur 30 bleibt hierbei unberücksichtigt. Voraussetzung für den Betrieb in der objektbasierten Unterstützungsart ist jedoch, dass erkannt wurde, dass das dem Fahrzeug 10 vorausfahrende Führungsfahrzeug 20 sich unmittelbar vor der Aktivierung der objektbasierten Unterstützungsart während einer Mindestzeitdauer von beispielsweise 2 Sekunden in der Fahrspur 30 befunden hat.

In der objektbasierten Unterstützungsart generiert die Steuereinrichtung 3 anhand der Objektdaten s2 ein von den Spurdaten s1 unabhängiges objektdatenbasiertes Lenkstellsignal Mo, das als Lenkstellsignal s4 der Lenkstelleinrichtung 4 zugeführt wird, um am Fahrzeug 10 eine kurskorrigierende Wirkung entsprechend dem durch das objektdatenbasierte Lenkstellsignal Mo vorgegebenen Zusatzlenkmoment und/oder Zusatzlenkwinkel zu erzielen.

Die fusionierte Unterstützungsart entspricht einer Kombination der reinen fahrspurbezogenen Unterstützungsart und der reinen objektbezogenen Unterstützungsart zu einer Unterstützungsart, bei der über vörgebbare Priorisierungsmaße Ps, Po festgelegt wird, in welchem Verhältnis zueinander die fahrspurbezogene und die objektbezogene Unterstützungsart einen Beitrag zur fusionierten Unterstützungsart liefern sollen. Demnach werden bei der fusionierten Unterstützungsart sowohl Spurdaten s1 als auch Objektdaten s2 berücksichtigt. Voraussetzung für den Betrieb in der fusionierten Unterstützungsart ist daher, dass die Fahrspur 30 erkannt wird und dass das Führungsfahrzeug 20 als in der Fahrspur 30 fahrend erkannt wird.

In der fusionierten Unterstützungsart generiert die Steuereinrichtung 3 anhand der Spurdaten s1 und der Objektdaten s2 jeweils auf die gleiche Weise wie in der reinen spurbasierten bzw. objektbasierten Unterstützungsart ein spurdatenbasiertes bzw. objektdatenbasiertes Lenkstellsignal Ms bzw. Mo und kombiniert diese beiden Lenkstellsignale Ms, Mo zu einem fusionierten Lenkstellsignal Mf, das als Lenkstellsignal s4 der Lenkstelleinrichtung 4 zugeführt wird, um am Fahrzeug 10 eine kurskorrigierende Wirkung entsprechend dem durch das fusionierte Lenkstellsignal Mf vorgegebenen Zusatzlenkmoment und/oder Zusatzlenkwinkel zu erzielen. Die Berechnung des fusionierten Lenkmoments Mf erfolgt gemäß der Gleichung:

$$Mf = Po \cdot Mo + Ps \cdot Ms,$$

wobei Mo und Ms das objektdatenbasierte bzw. spurdatenbasierte Lenkstellsignal bezeichnen und Po und Ps die vorgebbaren Priorisierungsmaße bezeichnen. Die Fusionierung erfolgt somit auf der Ausgangsseite der Steuereinrichtung 3.

Alternativ kann die Fusionierung auch auf der Eingangsseite der Steuereinrichtung 3 vorgenommen werden, was dadurch erreicht wird, dass die Objektspur 37 und die Spurlinie 33 zu einer fiktiven Ersatzspur fusioniert werden, deren Lage in Abhängigkeit der Priorisierungsmaße zwischen der Objektspur 37 und der Spurlinie 33 hin und her verschoben werden kann, und dass diese fiktive Ersatzspur als Sollspur der Ermittlung der Lenkanweisung zugrunde gelegt wird.

Die von der Steuereinrichtung 3 bereitgestellte Querführungsunterstützungsfunktion ist über den gesamten Geschwindigkeitsbereich des Fahrzeugs 10 verfügbar, wobei die Steuereinrichtung 3 in Abhängigkeit der Fahrgeschwindigkeit des Fahrzeugs 10 eine der oben genannten Unterstützungsarten als Querführungsbetriebsart festlegt, nach der die Unterstützung erfolgen soll. Wenn die Voraussetzungen für den Betrieb in der festgelegten Unterstützungsart nicht erfüllt sind, weil beispielsweise die Fahrspur 30 aufgrund von fehlenden Spurmarkierungen 31, 32 nicht erkennbar ist oder weil das erforderliche Führungsfahrzeug 20 nicht vorhanden ist, wird die Steuereinrichtung 3 in einen Passivzustand geschaltet und es wird gewartet bis die Voraussetzungen wieder erfüllt. Sind die Voraussetzungen wieder erfüllt, erfolgt eine automatische Umschaltung vom Passivzustand in die jeweilige Unterstützungsart. Im Passivzustand werden dem Fahrer keine unterstützenden Maßnahmen angeboten. Der Fahrer wird daher über die Umschaltung in den Passivzustand durch eine entsprechende, über die Mensch-Maschine-Schnittstelle 5 ausgegebene Information informiert.

Die Steuereinrichtung 3 legt die Querführungsbetriebsart in Abhängigkeit der Fahrgeschwindigkeit des Fahrzeugs 10 wie folgt fest:

In einem hohen Fahrgeschwindigkeitsbereich, d.h. bei einer Fahrgeschwindigkeit oberhalb eines oberen Geschwindigkeitsgrenzwerts vo von beispielsweise 60 km/h wird die fahrspurbasierte Unterstützungsart als Querführungsbetriebsart festegelegt, sofern die Voraussetzungen für diese Betriebsart erfüllt sind. Bei einem Ausfall der Fahrspurerkennung, beispielsweise aufgrund von nicht vorhandenen Fahrspurmarkierungen 31, 32 oder aufgrund von Erkennungsproblemen, wird auf die objektbasierte Unterstützungsart umgeschaltet, sofern die Voraussetzungen für diese Betriebsart erfüllt sind. Ansonsten erfolgt eine Umschaltung in den Passivzustand. Wenn die Voraussetzungen für den Betrieb in der fahrspurbasierten Unterstützungsart spätestens nach Ablauf einer vorgegebenen Grenzzeit von beispielsweise 2 Sekunden seit der Umschaltung in die objektbasierte Unterstützungsart wieder erfüllt sind, erfolgt eine Umschaltung zurück in die fahrspurbasierte Unterstützungsart, ansonsten erfolgt eine Umschaltung in den Passivzustand.

Im hohen Fahrgeschwindigkeitsbereich wird die Unterstützung demnach gemäß der fahrspurbasierten Unterstützungsart angeboten, wobei lediglich kurzeitige Ausfälle der Fahrspurerkennung durch die objektbasierte Unterstützungsart überbrückt werden und bei länger andauernden Ausfällen eine Umschaltung in den Passivzustand vorgenommen wird. Die Unterstützung erfolgt hierbei mit geringem Automatisierungsgrad, so dass der Fahrer selbst noch mitlenken muss und die Lenkaufgabe nicht vollständig dem Fahrerassistenzsystem übertragen kann.

In einem niederen Fahrgeschwindigkeitsbereich, d.h. bei einer Fahrgeschwindigkeit unterhalb eines unteren Geschwindigkeitsgrenzwerts vu von beispielsweise 30 km/h erfolgt die Unterstützung in der gleichen Weise wie im hohen Fahrgeschwindigkeitsbereich, sofern die Abstandsregelfunktion nicht aktiv ist. Falls die Abstandsregelfunktion hingegen aktiv ist oder aktiviert wird, was voraussetzt, dass Führungsfahrzeug 20 vorhanden ist und erkannt worden ist, wird die objektbasierte Unterstützungsart als Querführungsbetriebsart festgelegt. Die Unterstützung erfolgt hierbei mit einem hohen Automatisierungsgrad, so dass das Fahrzeug 10 in seiner Längs- und Querbewegung dem Führungsfahrzeug 20 geregelt nachgeführt wird und der Fahrer die Längs- und Querführung des Fahrzeugs 10 dem Fahrerassistenzsystem nahezu vollständig übertragen kann. Die Querbewegung des Fahrzeugs 10 kann dabei mit einem herkömmlichen Spurregler unter Verwendung der Objektspur 37 als Führungsgröße oder mit einem Deichselregler gemäß der eingangs genannten DE 199 19 644 C2 geregelt werden.

Falls die Fahrgeschwindigkeit des Fahrzeugs 10 ausgehend vom niederen Fahrgeschwindigkeitsbereich zum hohen Fahrgeschwindigkeitsbereich ansteigt oder umgekehrt ausgehend vom hohen Fahrgeschwindigkeitsbereich zum niederen Fahrgeschwindigkeitsbereich abfällt, dann kann der Fall auftreten, dass für die beiden Fahrgeschwindigkeitsbereiche unterschiedliche Unterstützungsarten als Querführungsbetriebsart festzulegen sind, so dass eine Überführung der einen Unterstützungsart in die andere erforderlich ist.

Eine solche Überführung wird in dem zwischen dem hohen und niederen Fahrgeschwindigkeitsbereich liegenden Geschwindigkeitsübergangsbereich wie folgt vorgenommen:

Wenn die Abstandsregelfunktion nicht aktiv ist, wird die Querführungsbetriebsart im hohen und niederen Fahrgeschwindigkeitsbereich in der gleichen Weise festgelegt und wird daher auch im Geschwindigkeitsübergangsbereich in der gleichen Weise wie im hohen Fahrgeschwindigkeitsbereich festgelegt. Man erhält somit über den gesamten Geschwindigkeitsbereich die gleiche Unterstützungsart.

Wenn Abstandsregelfunktion hingegen aktiv ist oder aktiviert wird, unterscheiden sich die im niederen und hohen Fahrgeschwindigkeitsbereich festzulegende Querführungsbetriebsarten voneinander. Im Geschwindigkeitsübergangsbereich ist es daher erforderlich, die objektbasierte und spurbasierte Unterstützungsart miteinander derart zu kombinieren, dass die eine in die andere übergeführt werden kann. Dies wird dadurch erreicht, dass die fusionierte Unterstützungsart als Querführungsbetriebsart festgelegt wird, und dass die Priorisierungsmaße Po, Ps in Abhängigkeit der Fahrgeschwindigkeit v des Fahrzeugs 10 wie in Figur 3 dargestellt variiert werden, um eine kontinuierliche Überführung der einen Unterstützungsart in die andere zu erreichen.

Gemäß Figur 3 wird in dem unterhalb des unteren Geschwindigkeitsgrenzwerts vu liegenden niederen Fahrgeschwindigkeitsbereich das dem objektbasierten Lenkmoment Mo zugeordnete Priorisierungsmaß Po auf einen Maximalwert, beispielsweise auf 100%, gesetzt und das dem spurbasierten Lenkmoment Ms zugeordnete Priorisierungsmaß Ps auf den Wert Null gesetzt. Damit erhält man im niederen Fahrgeschwindigkeitsbereich eine vollständige Domination der objektbasierten Unterstützungsart gegenüber der spurbasierten Unterstützungsart, so dass die Spurdaten s1 keinen Beitrag zur Querführungsunterstützung leisten können. Entsprechend wird in dem hohen Fahrgeschwindigkeitsbereich oberhalb des oberen Geschwindigkeitsgrenzwerts vo das dem objektbasierten Lenkmoment Mo zugeordnete Priorisierungsmaß Po auf den Wert Null gesetzt und das dem spurbasierten Lenkmoment Ms zugeordnete Priorisierungsmaß Ps auf einen Maximalwert, beispielsweise auf 100%, gesetzt. Damit erhält man im hohen Fahrgeschwindigkeitsbereich eine vollständige Domination der spurbasierten Unterstützungsart gegenüber der objektbasierten Unterstützungsart, so dass die Objektdaten s2 keinen Beitrag zur Querführungsunterstützung leisten können. Ausgehend vom niederen Fahrgeschwindigkeitsbereich wird mit zunehmender Fahrgeschwindigkeit v ab Überschreitung des unteren Geschwindigkeitsgrenzwerts vu das Priorisierungsmaß Po kontinuierlich derart verringert, dass es beim oberen Geschwindigkeitsgrenzwert vo den Wert Null erreicht. Das Priorisierungsmaß Ps wird im gleichen Maße vom Wert Null auf den Maximalwert erhöht. Damit wird in dem Geschwindigkeitsübergangsbereich zwischen den beiden Geschwindigkeitsgrenzwerten vu, vo eine kontinuierliche Verlagerung des Schwerpunkts der fusionierten Unterstützungsart von der reinen objektbasierten Unterstützungsart zu der reinen spurbasierten Unterstützungsart erreicht.

Wie bereits ausgeführt erfolgt die Querführungsunterstützung im niederen Fahrgeschwindigkeitsbereich mit hohem Automatisierungsgrad, wenn die Abstandsregelfunktion aktiv ist, und im hohen Fahrgeschwindigkeitsbereich mit geringem Automatisierungsgrad. Im Geschwindigkeitsübergangsbereich wird der Automatisierungsgrad daher mit zunehmender Geschwindigkeit bis auf den im hohen Fahrgeschwindigkeitsbereich geltenden Automatisierungsgrad reduziert, so dass der Fahrer mit zunehmender Fahrgeschwindigkeit zunehmend mehr Lenkkorrekturen bei der Fahrzeugquerführung durchzuführen hat.

Dem Fahrer wird über die Mensch-Maschine-Schnittstelle 5, angezeigt, welche der Unterstützungsarten momentan verfügbar sind und nach welcher Unterstützungsart die Unterstützung momentan erfolgt. Der Fahrer hat zudem die Möglichkeit über ein Eingabemenü vorab festzulegen, ob die Umschaltung von der spurdatenbasierten Unterstützungsart zur objektdatenbasierten Unterstützungsart automatisch erfolgen soll, sobald eine vorgegebene Umschaltbedingung erfüllt ist, oder ob die Umschaltung in Antwort auf eine fahrerseitige Quittierungsaktion erfolgen soll, durch die der Fahrer eine Quittierungsanfrage des Fahrerassistenzsystems bestätigt, durch welche dem Fahrer angezeigt wird, dass die vorgegebene Umschaltbedingung erfüllt ist, oder ob eine Umschaltung nicht erfolgen soll und daher auch keine Quittierungsanfrage ausgegeben werden soll.

Die fahrerseitige Quittierungsaktion ist vorteilhafterweise ein Bewegungsablauf, der identisch zu dem Bewegungsablauf ist, durch den der Fahrer die Abstandsregelfunktion aktiviert. Die Eingabemittel zur Aktivierung der Abstandsregelfunktion fungieren somit auch als Eingabemittel für die Quittierungsaktion.

Die vorgegebene Umschaltbedingung umfasst kumulativ die Bedingungen, dass die Fahrgeschwindigkeit v des Fahrzeugs 10 geringer ist als der untere Geschwindigkeitsgrenzwert vu und dass die Abstandsregelfunktion aktiv ist. Die vorgegebene Umschaltbedingung ist demnach erfüllt, sobald die Fahrgeschwindigkeit v den unteren Geschwindigkeitsgrenzwert vu bei gleichzeitig aktiver Abstandsregelfunktion unterschreitet oder sobald die Abstandsregelfunktion im Geschwindigkeitsbereich unterhalb des unteren Geschwindigkeitsgrenzwerts vu aktiviert wird. Die Aktivierung der Abstandsregelfunktion im Geschwindigkeitsbereich unterhalb der unteren Grenzgeschwindigkeitsgrenze vu stellt dabei gleichzeitig die fahrerseitige Quittierungsaktion dar, durch die der Fahrer bestätigt, dass eine Umschaltung erfolgen soll.

Es ist selbstverständlich denkbar, dass das Fahrerassistenzsystem neben der genannten, zur Abstandsregelung vorgesehenen Abstandsregelfunktion auch eine weitere Längsregelfunktion umfassen kann, beispielsweise zur Regelung oder Begrenzung der Fahrgeschwindigkeit auf einen vorgegebenen Wert.

**Patentansprüche**

**1.** Fahrerassistenzsystem zur Unterstützung des Fahrers eines Fahrzeugs (10) bei der Fahrzeugführung,

- mit einem Fahrspurerkennungssystem (1) zum Erkennen einer vom Fahrzeug (10) befahrenen momentanen Fahrspur (30),
- mit einem Objekterkennungssystem (2) zum Erkennen eines dem Fahrzeug (10) vorausfahrenden Führungsfahrzeugs (20) und zum Ermitteln einer Objektspur (37) als Bewegungsspur des Führungsfahrzeugs (20),
- mit einer Steuereinrichtung (3) zur Unterstützung des Fahrers beim Halten der Fahrspur (30), wobei die Steuereinrichtung (3) in einer reinen fahrspurbezogenen Unterstützungsart betreibbar ist, in der die Unterstützung basierend auf der erkannten momentanen Fahrspur (30) erfolgt, in einer reinen objektbezogenen Unterstützungsart betreibbar ist, in der die Unterstützung basierend auf der ermittelten Objektspur (37) erfolgt, und in einer fusionierten Unterstützungsart betreibbar ist, die einer Kombination der fahrspurbezogenen und objektbezogenen Unterstützungsart entspricht, und wobei die Steuereinrichtung (3) eine der Unterstützungsarten als Querführungsbetriebsart festlegt, nach der die Unterstützung erfolgen soll,

**dadurch gekennzeichnet,**

**dass** die Steuereinrichtung (3) eingerichtet ist, die Querführungsbetriebsart in Abhängigkeit der momentanen Fahrgeschwindigkeit (v) des Fahrzeugs (10) festzulegen.

2. Fahrerassistenzsystem nach Anspruch 1,
**dadurch gekennzeichnet,**
**dass** die Steuereinrichtung (3) eingerichtet ist, bei einer Fahrgeschwindigkeit oberhalb eines oberen Geschwindigkeitsgrenzwerts (vo) die fahrspurbezogene Unterstützungsart als Querführungsbetriebsart festzulegen, sofern die momentane Fahrspur (30) vom Fahrspurerkennungssystem (1) erkannt wird.

3. Fahrerassistenzsystem nach Anspruch 2,
**dadurch gekennzeichnet,**
**dass** die Steuereinrichtung (3) eingerichtet ist, die Querführungsbetriebsart bei einem Ausfall der Fahrspurerkennung auf die objektbezogene Unterstützungsart umzuschalten, sofern vorab ein dem Fahrzeug (10) in dessen Fahrspur (30) vorausfahrendes Fahrzeug als Führungsfahrzeug (20) erkannt worden ist.

4. Fahrerassistenzsystem nach Anspruch 3,
**dadurch gekennzeichnet,**
**dass** die Steuereinrichtung (3) eingerichtet ist, die Querführungsbetriebsart in einen Passivzustand zu schalten, in dem keine Unterstützung angeboten wird, falls der Ausfall der Fahrspurerkennung länger als eine vorgegebene Grenzzeit dauert oder falls beim Ausfall der Spurerkennung kein Führungsfahrzeug (20) erkannt worden ist.

5. Fahrerassistenzsystem nach Anspruch 4,
**dadurch gekennzeichnet,**
**dass** die Steuereinrichtung (3) eingerichtet ist, die Querführungsbetriebsart vom Passivzustand in die fahrspurbezogene Unterstützungsart umzuschalten, sobald die momentane Fahrspur (30) wieder erkannt wird.

6. Fahrerassistenzsystem nach einem der vorherigen Ansprüche,
**dadurch gekennzeichnet,**
**dass** die Steuereinrichtung (3) zur Unterstützung des Fahrers eine Lenkanweisung (s4) an den Fahrer und/oder an eine Lenkstelleinrichtung (4) zur Verstellung eines Lenkwinkels des Fahrzeugs (10) ausgibt.

7. Fahrerassistenzsystem nach Anspruch 6,
**dadurch gekennzeichnet**
**dass** die Lenkanweisung (s4) einem Lenkstellsignal entspricht, durch das an einer Lenkeinrichtung des Fahrzeugs (10) ein Zusatzlenkmoment und/oder ein Zusatzlenkwinkel eingestellt wird zusätzlich zu einem vom Fahrer durch eine Lenkaktion vorgegebenen Lenkmoment oder Lenkwinkel.

8. Fahrerassistenzsystem nach Anspruch 6 oder 7,
**dadurch gekennzeichnet,**
**dass** basierend auf der erkannten momentanen Fahrspur (30) bzw. der ermittelten Objektspur (37) eine Sollspur für das Fahrzeug bestimmt wird und dass die Lenkanweisung erst ausgegeben wird, wenn das Fahrzeug (10) ein um die Sollspur herum definiertes Toleranzband (34) vorgegebener Breite (B) verlässt.

9. Fahrerassistenzsystem nach einem der Ansprüche 2 bis 8, **dadurch gekennzeichnet,**
**dass** die Steuereinrichtung (3) eine Längsregelfunktion zur Regelung des Abstands zu dem erkannten Führungsfahrzeug (20) umfasst und dass die Steuereinrichtung (3) eingerichtet ist, bei einer Fahrgeschwindigkeit (v) unterhalb eines unteren Geschwindigkeitsgrenzwerts (vu) die objektbezogene Unterstützungsart als Querführungsbetriebsart festzulegen, falls die Längsregelfunktion aktiv ist oder aktiviert wird.

10. Fahrerassistenzsystem nach Anspruch 9,
    **dadurch gekennzeichnet,**
    **dass** die Steuereinrichtung (3) eingerichtet ist, bei einer Fahrgeschwindigkeit (v) unterhalb des unteren Geschwindigkeitsgrenzwerts (vu) die Querführungsbetriebsart in der gleichen Weise wie bei einer Fahrgeschwindigkeit (v) oberhalb des oberen Geschwindigkeitsgrenzwerts (vo) festzulegen, sofern die Längsregelfunktion nicht aktiv ist.

11. Fahrerassistenzsystem nach Anspruch 9 oder 10,
    **dadurch gekennzeichnet,**
    **dass** die Steuereinrichtung (3) eingerichtet ist, die Bewegung des Fahrzeugs (10) im Sinne einer Längs- und Querverfolgung des Führungsfahrzeugs (20) zu regeln, wenn die Längsregelfunktion bei einer Fahrgeschwindigkeit (v) unterhalb der des unteren Geschwindigkeitsgrenzwerts (vu) aktiv ist oder aktiviert wird.

12. Fahrerassistenzsystem nach einem der Ansprüche 9 bis 11, **dadurch gekennzeichnet,**
    **dass** die Steuereinrichtung (3) eingerichtet ist, die Querführungsbetriebsart wahlweise automatisch oder in Antwort auf eine vom Fahrer durch eine Quittierungsaktion bestätigte Quittierungsanfrage von der fahrspurbezogenen Unterstützungsart zur objektbezogenen Unterstützungsart umzuschalten.

13. Fahrerassistenzsystem nach Anspruch 12,
    **dadurch gekennzeichnet,**
    **dass** Eingabemittel zur Aktivierung der Längsregelfunktion vorgesehen sind und dass die Quittierungsaktion eine Betätigung dieser Eingabemittel in gleicher Weise wie zur Aktivierung der Längsregelfunktion umfasst.

14. Fahrerassistenzsystem nach einem der Ansprüche 9 bis 13, **dadurch gekennzeichnet,**
    **dass** die Steuereinrichtung (3) eingerichtet ist, bei einer Fahrgeschwindigkeit innerhalb eines durch den oberen und unteren Geschwindigkeitsgrenzwert (vo, vu) definierten Geschwindigkeitsübergangsbereichs die Querführungsbetriebsart wie folgt festzulegen:

    - falls die Längsregelfunktion nicht aktiv ist, wird die Querführungsbetriebsart in der gleichen Weise wie bei einer Fahrgeschwindigkeit (v) oberhalb des oberen Geschwindigkeitsgrenzwerts (vo) festgelegt,
    - falls die Längsregelfunktion aktiv ist oder aktiviert wird, wird die fusionierte Unterstützungsart als Querführungsbetriebsart festgelegt und in Abhängigkeit der Fahrgeschwindigkeit (v) derart variiert, dass bei einem Anstieg der Fahrgeschwindigkeit (v) vom unteren Geschwindigkeitsgrenzwert (vu) zum oberen Geschwindigkeitsgrenzwert (vo) die bei niederer Fahrgeschwindigkeit geforderte objektbezogene Unterstützungsart kontinuierlich in die bei hoher Fahrgeschwindigkeit geforderte fahrspurbezogene Unterstützungsart übergeführt wird.

15. Verfahren zur Unterstützung des Fahrers eines Fahrzeugs beim Spurhalten auf einer vom Fahrzeug (10) befahrenen momentanen Fahrspur (30), bei dem die momentane Fahrspur (30) erkannt wird, bei dem eine Bewegungsspur eines dem Fahrzeug (10) vorausfahrenden Führungsfahrzeugs (20) als Objektspur (37) ermittelt wird und bei dem die Unterstützung als eine reine fahrspurbezogene Unterstützungsart basierend auf der erkannten momentanen Fahrspur (30) erfolgen kann, oder als eine reine objektbezogene Unterstützungsart basierend auf der ermittelten Objektspur (37) erfolgen kann, oder als eine fusionierte Unterstützungsart basierend sowohl auf der erkannten momentanen Fahrspur (30) als auch auf der erkannten Objektspur (37) erfolgen kann,
    **dadurch gekennzeichnet,**
    **dass** die Unterstützung über den gesamten vom Fahrzeug (10) durchfahrbaren Geschwindigkeitsbereich angeboten wird und dass in Abhängigkeit der momentanen Fahrgeschwindigkeit (v) des Fahrzeugs (10) eine der Unterstützungsarten als Querführungsbetriebsart festegelegt wird, nach der die Unterstützung erfolgen soll.

**Claims**

1. Driver assistance system for assisting the driver of a vehicle (10) when driving the vehicle, with a lane recognition system (1) for identifying a lane (30) in which the vehicle (10) currently travels,
   with an object recognition system (2) for identifying a leading vehicle (20) travelling in front of the vehicle (10) and for determining an object lane (37) movement lane of the leading vehicle (20),
   with a control device (3) for assisting the driver in keeping to the lane (30), wherein the control device (3) can be operated in a purely lane-related assistance mode in which the assistance is based on the identified current lane (30), in a purely object-related assistance mode in which the assistance is based on the identified object lane (37) and in a fusion assistance mode which corresponds to a combination of the lane-related and the object-related assistance modes and wherein the control device (33) defines one of the assistance modes as a transverse guidance mode on which the assistance is to be based, **characterised in that**
the control device (3) is designed to define the transverse guidance mode in dependence on the current travelling speed (v) of the vehicle (10).

2. Driver assistance system according to claim 1,
**characterised in that**
the control device (3) is designed to define the lane-related assistance mode as transverse guidance mode at a travelling speed above an upper speed limit (vo) provided that the currant lane (30) is identified by the lane recognition system (1).

3. Driver assistance system according to claim 2,
**characterised in that**
the control device (3) is designed to switch to the object-related assistance mode at a failure of lane recognition provided that a vehicle travelling in front of the vehicle (10) in the lane (30) of the latter has been identified as leading vehicle (20).

4. Driver assistance system according to claim 3,
**characterised in that**
the control device (3) is designed to switch the transverse guidance mode to a passive state in which no assistance is offered if the lane recognition fails for longer than a preset
limit time or if no leading vehicle (20) has been identified on failure of the lane precognition.

5. Driver assistance system according so claim 4,
**characterised in that**
the control device (3) is designed to switch the transverse guidance mode from the passive state to the lane-related assistance mode as soon as the current lane (30) is once again identified.

6. Driver assistance system according to any of the preceding claim,
**characterised in that**
the control device (3) outputs a steering instruction (s4) to the driver and/or to a steering control equipment (4) for changing a steering angle of the vehicle (10) in order to assist the driver.

7. Driver assistance system according to claim 6,
**characterised in that**
the steering instruction (s4) corresponds to a steering control signal by means of which an auxiliary steering moment and/or an auxiliary steering angle is/are set at a steering device of the vehicle (10) in addition to the steering moment or steering angle preset by the driver in a steering action.

8. Driver assistance system according to claim 6 or 7,
**characterised in that**
on the basis of the identified current lane (30) or of the identified object lane (37), a target lane is determined for the vehicle, and **in that** the steering instruction is output only if the vehicle (10) leaves a tolerance band (34) of a preset width (B) defined around the target lane.

9. Driver assistance system according to any of claims 2 to 8,
**characterised in that**
the control device (3) includes a longitudinal control function to control the distance from the identified leading vehicle (20), and **in that** the control device (3) is designed to define the object-related assistance mode as transverse guidance mode at a travelling speed (v) below a lower speed limit (vu) if the longitudinal control function is active or activated.

10. Driver assistance system according to claim 9.
**characterised in that**
the control device (3) is designed to define the transverse guidance mode at a travelling speed (v) below the lower speed limit (vu) in the same way as at a travelling speed (v) above the upper speed limit (vo) provided that the longitudinal control function is not active.

11. Driver assistance system according to claim 9 or 10,
   **characterised in that**
   the control device (3) is designed to control the movement of the vehicle (10) in the sense of a longitudinal and transverse tracking of the leading vehicle (20) if the longitudinal control function is active or activated at a travelling speed (v) below the lower speed limit (vu).

12. Driver assistance system according to any of claims 9 to 11,
   **characterised in that**
   the control device (3) is designed to switch the transverse guidance mode from the lane-related assistance mode to the object-related assistance mode either automatically or in response to an acknowledgement request confirmed by the driver by means of an acknowledgement action.

13. Driver assistance system according to claim 12,
   **characterised** that
   inputting means are provided for activating the longitudinal control function, and in that the acknowledgement action incudes a conformation of these inputting means in the same way as for the activation of the longitudinal control function.

14. Driver assistance system according to any of claims 9 to 13,
   **characterised in that**
   the control device (3) is designed to define the transverse guidance mode as follows within a transitional speed region defined by the upper and lower speed limits (vo, vu):

   if the longitudinal control function is not active, the transverse guidance mode is defined in the same way as at a travelling speed (v) above the upper speed limit (vo),
   if the longitudinal control function is active or activated, the fusion assistance mode is defined as transverse guidance mode and varied such in dependency on the travelling
   speed (v) that, if the traveling speed (v) increases from the lower speed limit (vu) to the upper speed limit (vo) the object-related assistance mode required at low travelling speed
   is continuously switched to the lane-related assistance mode required at a high travelling speed.

15. Method for assisting the driver of a vehicle in keeping to a lane (30) currently travelled in by the vehicle (10), herein the current lane (30) is identified wherein a movement lane of a leading vehicle (20) travelling in front of the vehicle (10) is identified as object lane (37) and wherein the assistance may be provided in a purely lane-related assistance mode based on the identified current lane (30) or in a purely object-related assistance mode based on the identified object lane (37) or in a fusion assistance mode based both on the identified current lane (30) and on the identified object lane (37),
   **characterised in that**
   the assistance is offered across the entire speed range covered by the vehicle (10), and **in that**, depending on the current speed (v) of the vehicle (10), one of the assistance modes is defined as the transverse guidance mode on which the assistance is to be based.

**Revendications**

1. Système d'assistance au conducteur d'un véhicule (10) pour le guidage du véhicule comprenant
   un système de détection de voie (1) pour détecter une voie momentanément parcourue par le véhicule (10),
   un système (2) de détection d'objet pour détecter un véhicule de guidage (20) précédant le véhicule (10) et pour déterminer une voie d'objet (37) en tant que voie de déplacement du véhicule de guidage (20),
   un dispositif de commande (3) qui propose au conducteur une assistance au maintien de la voie (30), le dispositif de commande (3) pouvant être employé dans un mode d'assistance exclusivement lié à la voie, dans lequel l'assistance est réalisée sur la base de la voie (30) momentanée détectée, dans un mode d'assistance exclusivement lié à l'objet, dans lequel l'assistance est réalisée sur la base de la voie d'objet (37) détectée; et dans un mode d'assistance combine correspondant à une combinaison du mode d'assistance lié à la voie et du mode d'assistance lié à l'objet, et le dispositif de commande (3) déterminant un des modes d'assistance comme mode de guidage latéral, selon lequel l'assistance droit être réalisée, **caractérisé en ce que** le dispositif de commande (3) est conçu pour déterminer le mode de guidage latéral en fonction de la vitesse de conduite momentanée du véhicule (10).

2. Système d'assistance au conducteur selon la revendication 1, **caractérisé en ce que** le dispositif de commande (3) est conçu pour déterminer le mode d'assistance lié à la voie lorsque la vitesse de conduite est supérieure une valeur limite de vitesse (vo) supérieure dans la mesure où la voie (30) momentané est détectée par le système de détection de voie (1).

3. Système d'assistance au conducteur selon la revendication 2, **caractérisé en ce que** le dispositif de commande (3) est conçu pour passer du mode de guidage latéral au mode d'assistance lié à l'objet en cas de panné du système de détection de voie dans la mesure où un véhicule précédant le véhicule (10) dans sa voie (30) a été détecté en tant que véhicule de guidage (20).

4. Système d'assistance au conducteur selon la revendication 3, **caractérisé en ce que** le dispositif de commande (3) est conçu pour commuter le mode de guidage latéral dans un état passif lorsqu'aucune assistance n'est proposée si la panne du dispositif de détection de voie dure plus longtemps qu'une durée limite définie ou en cas de panne du dispositif de détection de voie, aucun véhicule de guidage (20) n'a été détecté.

5. Système d'assistance au conducteur selon la revendication 4, **caractérisé en ce que** le dispositif de commande (3) est conçu pour faire passer le mode de guidage latéral d'un état passif à un mode d'assistance lié à la voie dès que la voie (30) momentanée est de nouveau détectée.

6. Système d'assistance au conducteur selon l'une quelconque des revendications précédentes, **caractérisé en ce que** le dispositif de commande (3) pour assister le conducteur affiche une indication de direction (s4) au conducteur et / ou à un dispositif de direction (4) pour positionner l'angle de direction du véhicule (10).

7. Système d'assistance au conducteur selon la revendication 6, **caractérisé en ce que** l'indication de braquage (s4) correspond à un signal de position de braquage, qui règle un couple de braquage supplémentaire et / ou un angle de direction supplémentaire sur un dispositif de direction du véhicule (10) en plus d'un couple ce braquage ou d'un angle de direction défini par un actionnement du volant par le conducteur.

8. Système d'assistance au conducteur selon la revendication au 7, **caractérisé en ce que** sur la base d'une voie (30) détectée momentanément ou d'une voie d'objet (37) détectée, une voie théorique pour le véhicule est déterminés et **en ce que** l'indication de braquage est indiquée que lorsque le véhicule (10) quitte une bande de tolérance (34) définie autour de la voie théorique d'une largeur (B) déterminée.

9. Système d'assistance au conducteur selon l'une quelconque des revendications 2 à 8, **caractérisé en ce que** le dispositif de commande (3) comprend une fonction de réglage longitudinal pour régler la distance par rapport au véhicule de guidage (20) détecté et **en ce que** le dispositif de commande (3) est conçu pour définir le mode d'assistance lié à l'objet en tant que mode de guidage latéral lorsque la vitesse du véhicule (v) est inférieure à une valeur limite de vitesse (vu) inférieure si la fonction de réglage longitudinal est active ou activé.

10. Système d'assistance au conducteur selon la revendication 9, **caractérisé en ce que** le dispositif de commande (3) est conçu pour déterminer le mode de guidage latéral lorsque la vitesse (v) est inférieur à la valeur limite de vitesse (vu) inférieure de la même manière que lorsque la vitesse (v) est supérieure à la valeur limite de vitesse (vo) supérieure dans la mesure où la fonction de réglage longitudinal n'est pas active.

11. Système d'assistance au conducteur selon la revendication 9 ou 10, **caractérisé en ce que** le dispositif de commande (3) est conçu pour régler le mouvement du véhicule (10) dans le sens de suivre de manière longitudinale ou latérale le véhicule de guidage (20) lorsque la fonction de réglage longitudinal est active ou activée et que la vitesse (v) est inférieure à la valeur limite de vitesse (vu) inférieure.

12. Système d'assistance au conducteur selon l'une quelconque des revendications 9 à 11, **caractérisé en ce que** le dispositif de commande (3) est conçu pour faire passer le mode de guidage transversal alternativement automatiquement ou en réponse à une demande d'accusé de réception confirmée par une action d'accusé de réception du mode d'assistance lié au véhicule au mode d'assistance lié à l'objet.

**13.** Système d'assistance au conducteur selon la revendication 12, **caractérisé en ce qu'**il est prévu des éléments d'entrée pour l'activation de la fonction de réglage longitudinal et **en ce que** l'action d'accusé de réception comprend une confirmation de ces éléments d'entrée de la même manière que pour l'activation de la fonction de réglage longitudinal.

**14.** Système d'assistance au conducteur selon l'une quelconque des revendications 9 à 13, **caractérisé en ce que** le dispositif de commande (3) est conçu pour déterminer comme suit le mode de guidage latéral lorsqu'une vitesse se situe dans une plage de transition de vitesse définie par la valeur limite de vitesse (vo, vu) supérieure et inférieure :

si la fonction de réglage longitudinal n'est pas active, le mode de guidage latéral est déterminé de la même manière que lorsque la vitesse (v) est supérieure à la valeur limite de vitesse (vo) supérieure,
si la fonction de réglage longitudinale est active ou activée, le mode d'assistance combine est défini comme mode de guidage latéral et en fonction de la vitesse (v) varie de telle sorte que lors d'une augmentation de la vitesse (v) de la valeur limite de vitesse inférieure (vu) à la valeur limite de vitesse supérieure (vo) le mode d'assistance lié à l'objet exigé en cas de faible vitesse est converti en continu en mode d'assistance lié à la voie exigé en cas de vitesse élevée.
(30) parcourue momentanément par le véhiculé (10), lequel consisté à détecter la voie momentanée (30), qui consiste à détecter une voie de déplacement d'un véhicule (20) de guidage précédant le véhicule (10) en tant que voie d'objet, et qui consiste à ce que l'assistance puisse être réalisée en tant que mode d'assistance lisé la voie sur la base de la voie (30) momentanément détectée ou comme un mode d'assistance exclusivement lié à l'objet sur la base de la voie d'objet défini (37) ou comme un mode d'assistance combiné sur la base tant de la voie (30) momentanément détectée que de la voie d'objet (37) détectée, **caractérisée en ce que** l'assistance est disponible dans toute la gamme de vitesses pouvant être atteinte par le véhicule (10), et en fonction de la vitesse (v) momentanée du véhicule (10), un des modes d'assistance à adopter en tant que mode de guidage transversal est déterminé.

**Fig. 1**

**Fig. 3**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10017279 A1
- DE 19919644 C2